# EUROPEAN PATENT APPLICATION

(11) **EP 4 844 678 A1**
(43) Date of publication of application: **25.11.2026**
(21) Application number: 26180612.9
(22) Date of filing: 22.05.2026
(51) Int. Cl.: G06T 7/00, G06T 11/10, G06T 11/60

(54) **LEADING-EDGE DATA SOLUTION TO OPTIMIZE FRACTURE DETECTION IN BOREHOLE IMAGE LOGS**

(30) Priority: 23.05.2025 US 202519217281
(71) Applicant: Services Pétroliers Schlumberger, 75007 Paris (FR); GeoQuest Systems B.V., 2514 JG The Hague (NL)
(72) Inventor: SILVA, Thiago M.D., 330 18 Rio de Janeiro (BR); PAZ DE VASCONCELOS, Adna Grazielly, 330 18 Rio de Janeiro (BR); RIBEIRO, Aurelio Kasakewitch, Houston, 77042 (US); BRAZ DE SOUZA, Jorge André, Houston, 77042 (US)
(74) Representative: Schlumberger Intellectual Property Department

(57) **Abstract**

A method for creating a synthetic fracture includes receiving input data. The input data includes a background image of a borehole. The background image has no detectable fractures therein. The method also includes augmenting the input data to produce augmented data. The method also includes creating a synthetic fracture in the augmented data. The synthetic fracture is represented as a sinusoidal function in the borehole image.

## Description

### Background

Identifying geological features in wellbore images is a challenge for the energy industry. This high-resolution image data is the main source of lithology, rock texture, diagenesis, and structural events surrounding the well. These images are captured at a resolution of about 0.2 in, while a complete borehole image (BHI) log often spans in the range of hundreds to thousands of feet. As a result, identifying structures in the borehole images is a time-consuming task and heavily relies on interpreters' expertise and criteria, as different features might have similar aspects. Supervised machine learning algorithms have been used to automate and accelerate feature mapping. However, the accuracy of supervised applications depends on the labeled data quality used in training the model. Furthermore, the lack of annotation functionalities on petrotechnical software used for borehole image processing and interpretation makes the input-label image pair generation challenging. Moreover, manually labeling the data might result in a few examples in the training dataset.

In conventional image processing, this problem is overcome by using data augmentation techniques. Nevertheless, several data augmentation processes are not entirely applicable to borehole images, because some common operations such as rotation and cropping may not preserve real-world scenario meaning. Therefore, what is needed is an improved system and method for detecting fractures in borehole image logs.

### Summary

A method for creating a synthetic fracture is disclosed. The method includes receiving input data. The input data includes a background image of a borehole. The background image has no detectable fractures therein. The method also includes augmenting the input data to produce augmented data. The method also includes creating a synthetic fracture in the augmented data. The synthetic fracture is represented as a sinusoidal function in the borehole image.

A computing system is also disclosed. The computing system includes one or more processors and a memory system. The memory system includes one or more non-transitory computer-readable media storing instructions that, when executed by at least one of the one or more processors, cause the computing system to perform operations. The operations include receiving input data. The input data includes a background image of a borehole. The background image has no detectable fractures therein. The operations also include augmenting the input data to produce augmented data. The operations also include applying an image standardization technique to the augmented data to produce standardized data. The operations also include creating a synthetic fracture in the augmented data. The synthetic fracture is represented as a sinusoidal function in the borehole image. The synthetic fracture is created based upon an amplitude of the of the sinusoidal function, a period of the sinusoidal function, a translation of the sinusoidal function with respect to an X-axis, and/or a central position of the sinusoidal function in a Y-axis. The operations also include generating a new synthetic fracture based upon the synthetic fracture. The operations also include applying a one-dimensional Gaussian simulation to the new synthetic fracture for the X-axis and the Y-axis to produce an updated synthetic fracture. The operations also include generating a first two-dimensional Gaussian map of the updated synthetic fracture. The first two-dimensional Gaussian map emulates an inner texture of the updated synthetic fracture. The operations also include generating a second two-dimensional Gaussian map of the updated synthetic fracture. A normalized two-dimensional Gaussian map is generated by normalizing the second two-dimensional Gaussian map. A truncated two-dimensional Gaussian map is generated by applying a truncation threshold to the normalized two-dimensional Gaussian map. The operations also include combining the standardized data, the updated synthetic fracture, the first two-dimensional Gaussian map, and the truncated two-dimensional Gaussian map to produce a combined map.

A non-transitory computer-readable medium is also disclosed. The medium stores instructions that, when executed by one or more processors of a computing system, cause the computing system to perform operations. The operations include receiving input data. The input data includes a background image of a borehole. The background image has no detectable fractures therein. The operations also include augmenting the input data to produce augmented data. The input data is augmented by: (1) selecting a portion of the input data, and (2) performing a left-right flip of the selected portion, performing a translation on an X-axis of the selected portion, stretching the selected portion, compressing the selected portion, or a combination thereof. The operations also include applying an image standardization technique to the augmented data to produce standardized data. The image standardization technique includes a histogram equalization. The operations also include creating a synthetic fracture in the augmented data. The synthetic fracture is represented as a sinusoidal function in the borehole image. The synthetic fracture is created based upon an amplitude of the of the sinusoidal function, a period of the sinusoidal function, a translation of the sinusoidal function with respect to the X-axis, and a central position of the sinusoidal function in a Y-axis. The amplitude corresponds to a dip height which controls (1) a distance between a highest point and a lowest point of the sinusoidal function and (2) an angle between a fracture plane of the synthetic fracture and a plane perpendicular to a central longitudinal axis of the borehole. The period of the sinusoidal function is 2π. The translation of the sinusoidal function with respect to the X-axis represents a direction measured clockwise from a reference direction toward which the fracture plane dips. The translation indicates an orientation of the synthetic fracture with respect to a geographic reference. The geographic reference is true north. The operations also include generating a new synthetic fracture based upon the synthetic fracture. Generating the new synthetic fracture includes discretizing the sinusoidal function to represent the synthetic fracture in *n* segments to produce a discretized sinusoidal function. Generating the new synthetic fracture also includes adding a rectangle with a length equal to a segment length of the discretized sinusoidal function. A width of the rectangle is random. Generating the new synthetic fracture also includes adding a circle with a diameter equal to a largest width of the rectangle to each point of the discretized sinusoidal function to join the rectangles of consecutive segments to produce a new discretized sinusoidal function with irregular thickness. The new the discretized sinusoidal function with irregular thickness represents the new synthetic fracture. The operations also include applying a one-dimensional Gaussian simulation to the new synthetic fracture for the X-axis and the Y-axis to produce an updated synthetic fracture. The one-dimensional Gaussian simulation reduces a sinusoid perfect delineation of the new synthetic fracture and emulates fracture plane roughness. The operations also include generating a first two-dimensional Gaussian map of the updated synthetic fracture. The first two-dimensional Gaussian map emulates an inner texture of the updated synthetic fracture, which is used to generate different types of fractures. Generating the first two-dimensional Gaussian map includes determining an influence zone of each pixel of the updated synthetic fracture. The influence zone is determined based upon a major axis and a minor axis of an ellipse corresponding to the updated synthetic fracture. Generating the first two-dimensional Gaussian map also includes determining an inclination angle of the influence zone of each pixel. The inclination angle is determined based upon the major axis of the ellipse. Generating the first two-dimensional Gaussian map also includes transforming the pixels into a new pair, wherein the pixels are transformed based upon the major and minor axes and the inclination angle. The pixels are transformed using a rotation matrix. Generating the first two-dimensional Gaussian map also includes determining a covariance correlation between the new pair of the pixels. The covariance correlation is determined based upon a Euclidian distance between the pixels in the new pair. Generating the first two-dimensional Gaussian map also includes determining a covariance matrix based upon the covariance correlation. Generating the first two-dimensional Gaussian map also includes generating the first two-dimensional Gaussian map of the updated synthetic fracture based upon the covariance matrix. Positive values of the first two-dimensional Gaussian map simulate first acoustic amplitude fractures that are above a first threshold that simulates a closed fracture, and negative values of the first two-dimensional Gaussian map simulate second acoustic amplitude fractures that are below a second threshold that simulates an open fracture. The operations also include generating a second two-dimensional Gaussian map of the updated synthetic fracture. A normalized two-dimensional Gaussian map is generated by normalizing the second two-dimensional Gaussian map. A truncated two-dimensional Gaussian map is generated by applying a truncation threshold to the normalized two-dimensional Gaussian map. The truncation threshold is a uniformly random truncation parameter between 0.25 and 0.75. The truncated two-dimensional Gaussian map emulates a continuity of the synthetic fracture. The updated synthetic fracture is imprinted in regions above the truncation threshold. The synthetic fracture does not occur in regions below the truncation threshold. The operations also include creating a fracture label of the updated synthetic fracture. The fracture label of the updated synthetic fracture is created by imprinting the updated synthetic fracture to an empty image to produce a binary mask. The truncated two-dimensional Gaussian map emulates a continuity of the fracture label. The fracture label is imprinted in the regions above the truncation threshold. The fracture label does not occur in the regions below the truncation threshold. The binary mask is used as a ground truth for training one or more supervised machine learning models. The operations also include combining the standardized data, the updated synthetic fracture, the first two-dimensional Gaussian map, and the truncated two-dimensional Gaussian map to produce a combined map. Combining includes multiplying the updated synthetic fracture, the first two-dimensional Gaussian map, and the truncated two-dimensional Gaussian map to produce a product. The product also includes a weighting factor. Combining also includes adding the product to the standardized data to produce the combined map.

It will be appreciated that this summary is intended merely to introduce some aspects of the present methods, systems, and media, which are more fully described and/or claimed below. Accordingly, this summary is not intended to be limiting.

### Brief Description of the Drawings

The accompanying drawings, which are incorporated in and constitute a part of this specification, illustrate embodiments of the present teachings and together with the description, serve to explain the principles of the present teachings. In the figures:
**Figure 1** illustrates an example of a system that includes various management components to manage various aspects of a geologic environment, according to an embodiment.
**Figure 2** illustrates data augmentation processes, according to an embodiment.
**Figure 3** illustrates data augmentation processes applied to borehole images, according to an embodiment.
**Figure 4** illustrates a schematic view of background selection and data augmentation, according to an embodiment.
**Figure 5** illustrates a fracture dip height, according to an embodiment.
**Figure 6** illustrates a translation in the X-axis, according to an embodiment.
**Figure 7** illustrates a translation in the Y-axis, according to an embodiment.
**Figures 8A-8D** illustrate a fracture thickness calculation, according to an embodiment.
**Figure 9** illustrates adding one-dimensional Gaussian noise to the X-axis and the Y-axis, according to an embodiment.
**Figure 10** illustrates parameters in an influence zone of a pixel, according to an embodiment.
**Figures 11A** and **11B** illustrate a two-dimensional Gaussian map, used to simulate fracture inner texture, and its secondary map, used to emulate fracture continuity, with a threshold equal to 0.5, according to an embodiment.
**Figure 12** illustrates a synthetic fracture imprint to the borehole image unfractured background, according to an embodiment.
**Figures 13A-13D** illustrate examples of synthetic fractures imprinted to borehole images and their respective labels, created with borehole images from different vendors, according to an embodiment.
**Figure 14** illustrates a method for creating a synthetic fracture that mimics data in a borehole image, according to an embodiment.
**Figure 15** illustrates a schematic view of a computing system for performing at least a portion of the method(s) described herein, according to an embodiment.

### Detailed Description

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the present disclosure. The first object or step, and the second object or step, are both, objects or steps, respectively, but they are not to be considered the same object or step.

The terminology used in the description herein is for the purpose of describing particular embodiments and is not intended to be limiting. As used in this description and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques, and workflows that are in accordance with some embodiments. Some operations in the processing procedures, methods, techniques, and workflows disclosed herein may be combined and/or the order of some operations may be changed.

### System Overview

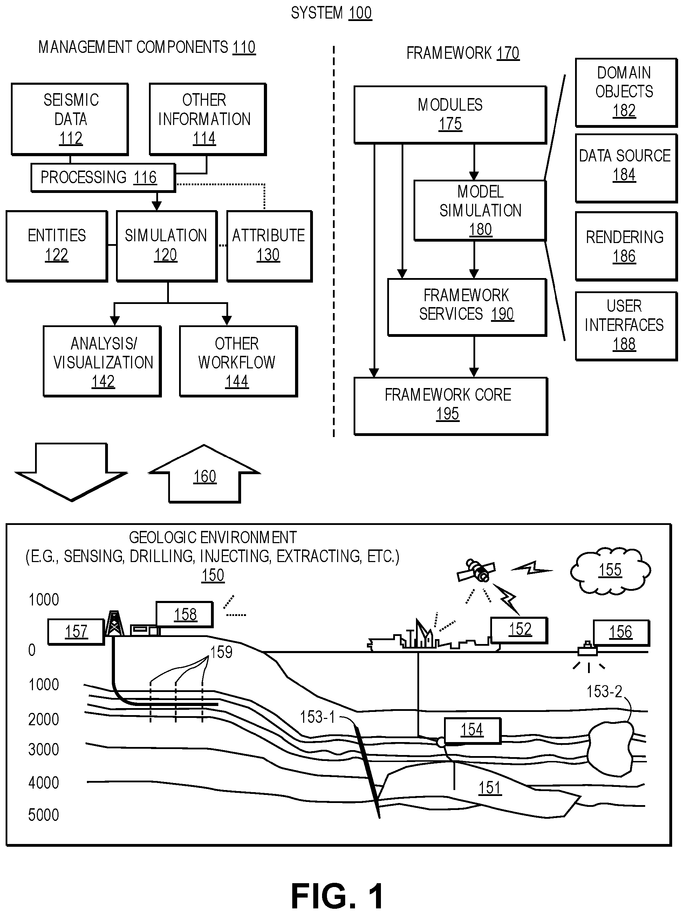

**Figure 1** illustrates an example of a system 100 that includes various management components 110 to manage various aspects of a geologic environment 150 (e.g., an environment that includes a sedimentary basin, a reservoir 151, one or more faults 153-1, one or more geobodies 153-2, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of **Figure 1**, the management components 110 include a seismic data component 112, an additional information component 114 (e.g., well/logging data), a processing component 116 (e.g., including calibration of the processing results with well data), a simulation component 120, an attribute component 130, an analysis/visualization component 142 and a workflow component 144. In operation, seismic data and other information provided per the components 112 and 114 may be input to the simulation component 120. The other information may be or include well data. The components, 112, 114 may be or include well data such as well logs, drilling logs, and/or cores, which may be used to calibrate the seismic data to rock and fluid properties.

In an example embodiment, the simulation component 120 may rely on entities 122. Entities 122 may include earth entities or geological objects such as wells, well data (e.g., used for calibration of rock and fluid properties), surfaces, bodies, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may operate in conjunction with a software framework such as an object-based framework. In such a framework, entities may include entities based on pre-defined classes to facilitate modeling and simulation. A commercially available example of an object-based framework is the MICROSOFT^{®} .NET^{®} framework (Redmond, Washington), which provides a set of extensible object classes. In the .NET^{®} framework, an object class encapsulates a module of reusable code and associated data structures. Object classes can be used to instantiate object instances for use in by a program, script, etc. For example, borehole classes may define objects for representing boreholes based on well data.

In the example of **Figure 1**, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of **Figure 1**, the analysis/visualization component 142 may allow for interaction with a model or model-based results (e.g., simulation results, etc.). As an example, output from the simulation component 120 may be input to one or more other workflows, as indicated by a workflow component 144.

As an example, the simulation component 120 may include one or more features of a simulator such as the ECLIPSE^{TM} reservoir simulator (SLB, Houston Texas), the INTERSECT^{TM} reservoir simulator (SLB, Houston Texas), etc. As an example, a simulation component, a simulator, etc. may include features to implement one or more meshless techniques (e.g., to solve one or more equations, etc.). As an example, a reservoir or reservoirs may be simulated with respect to one or more enhanced recovery techniques (e.g., consider a thermal process such as SAGD, etc.).

In an example embodiment, the management components 110 may include features of a commercially available framework such as the PETREL^{®} seismic to simulation software framework (SLB, Houston, Texas). The PETREL^{®} framework provides components that allow for optimization of exploration and development operations. The PETREL^{®} framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of modeling, simulating, etc.).

In an example embodiment, various aspects of the management components 110 may include add-ons or plug-ins that operate according to specifications of a framework environment. For example, a commercially available framework environment marketed as the OCEAN^{®} framework environment (SLB, Houston, Texas) allows for integration of add-ons (or plug-ins) into a PETREL^{®} framework workflow. The OCEAN^{®} framework environment leverages .NET^{®} tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

**Figure 1** also shows an example of a framework 170 that includes a model simulation layer 180 along with a framework services layer 190, a framework core layer 195 and a modules layer 175. The framework 170 may include the commercially available OCEAN^{®} framework where the model simulation layer 180 is the commercially available PETREL^{®} model-centric software package that hosts OCEAN^{®} framework applications. In an example embodiment, the PETREL^{®} software may be considered a data-driven application. The PETREL^{®} software can include a framework for model building and visualization.

As an example, a framework may include features for implementing one or more mesh generation techniques. For example, a framework may include an input component for receipt of information from interpretation of seismic data, one or more attributes based at least in part on seismic data, log data, image data, etc. Such a framework may include a mesh generation component that processes input information, optionally in conjunction with other information, to generate a mesh.

In the example of **Figure 1**, the model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

As an example, the domain objects 182 can include entity objects, property objects and optionally other objects. Entity objects may be used to geometrically represent wells, surfaces, bodies, reservoirs, etc., while property objects may be used to provide property values as well as data versions and display parameters. For example, an entity object may represent a well where a property object provides log information as well as version information and display information (e.g., to display the well as part of a model).

In the example of **Figure 1**, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of **Figure 1**, the geologic environment 150 may include layers (e.g., stratification) that include a reservoir 151 and one or more other features such as the fault 153-1, the geobody 153-2, etc. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, **Figure 1** shows a satellite in communication with the network 155 that may be configured for communications, noting that the satellite may additionally or instead include circuitry for imagery (e.g., spatial, spectral, temporal, radiometric, etc.).

**Figure 1** also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop a laterally extensive reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a workstep may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL^{®} software, for example, that operates on seismic data, seismic attribute(s), etc. As an example, a workflow may be a process implementable in the OCEAN^{®} framework. As an example, a workflow may include one or more worksteps that access a module such as a plug-in (e.g., external executable code, etc.).

### Leading-Edge Data Solution to Optimize Fracture Detection in Borehole Image Logs

The present disclosure addresses the problem of creating a large and accurate training dataset for machine learning algorithms aimed to detect fractures in borehole images. To accomplish this, mathematical tools may be used to create synthetic fractures in unfractured borehole image sections. As the location of the synthetic fracture is known, it is possible to create a pixel-by-pixel label that accurately informs the algorithm the pixels that belong to the fracture regions and which do not, creating a trustable reliable dataset to train machine learning models.

More particularly, the methods described herein create an accurate and reliable training dataset for supervised deep learning algorithms designed to detect fractures in borehole images. Borehole images with full coverage of the borehole wall may be used for this purpose, such as those derived from ultrasonic imaging tools. Segments of borehole images from unfractured intervals may be used as the background, and synthetic fractures may be added to the image using sinusoidal functions with randomized parameters. The non-fractured images used as background may provide examples with features similar to those found in nature, such as beddings, tool pad marks, and breakouts, allowing to create multiple fracture examples with a single image window.

To replicate real fracture attributes, Gaussian distributions may be utilized to randomly simulate the fracture aperture, generating a synthetic fracture with a non-constant aperture, emulating, for example, fractures that coalesce pores. Moreover, a two-dimensional Gaussian map may be built to simulate the inner fracture texture, creating open or closed synthetic fractures that closely resemble natural structures and inputting uncertainty to the model. To increase or decrease the impact of the two-dimensional Gaussian map in the fracture texture, a constant value may be sorted from a normal distribution, and the constant value may be multiplied with the Gaussian map.

As the fractures are synthetically created using a mathematical framework, it is possible to simultaneously distinguish which background pixels belong to the fracture class and create the label image. As a result, the labeling process of the synthetic fracture may be automated and consistent, overcoming the exhaustive and subjective process of manually labeling the borehole images. The Gaussian approach used to create both the fracture aperture and texture provides unlimited scenarios of fracture configuration, improving model robustness. With that, different types of fractures can be reproduced, such as open, healed, or partially open/healed. Furthermore, the algorithm can create multiple fracture examples per window image, reproducing highly fractured reservoir scenarios.

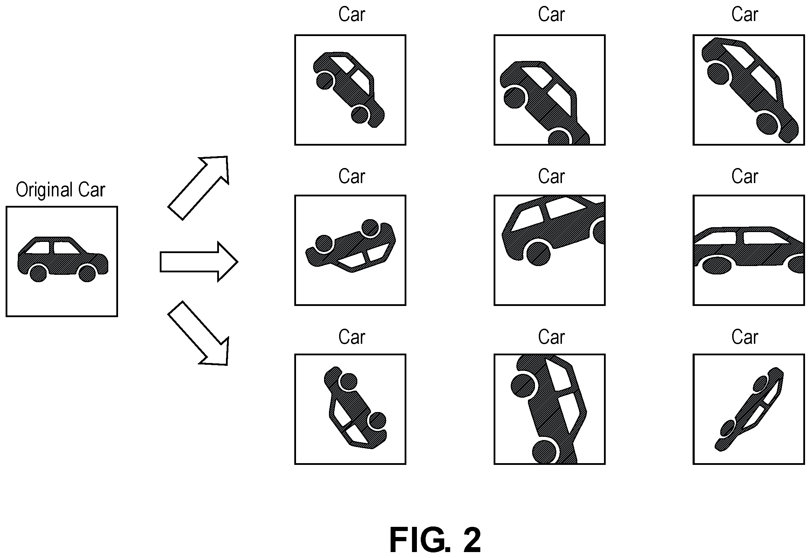

Efficiently training a deep learning model demands a large and precise dataset containing different examples of the target and its variations. Consequently, when data availability is poor, building a supervised machine learning may not be feasible or efficient. Detecting structures in borehole images relies on this context, where data labeling is costly and time-consuming, leading to insufficient data. To overcome this challenge, image data augmentation techniques have been applied, including image vertical and horizontal flipping, translation, rotation, cropping, and resizing. **Figure 2** illustrates a data augmentation process, according to an embodiment. For object identification intents, these operations do not change the physics of the problem. However, attributes such as shape and orientation are intrinsic to geological data visible on borehole images, and the image data augmentation techniques may not preserve such physical relations.

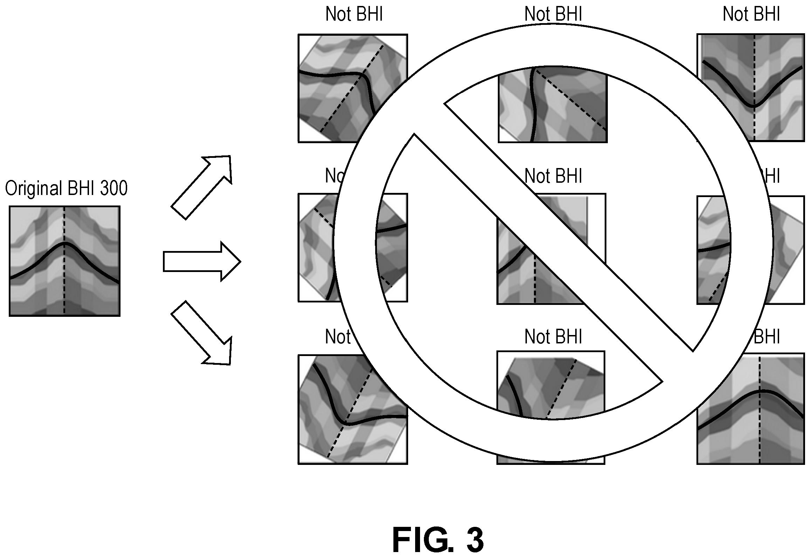

Most data augmentation procedures are not applied to the borehole images, because the geological features existing in the borehole images follow some physical rules related to fracture and borehole geometries. The transformations that maintain the physics include horizontal flips, translation along the x-axis while keeping the y-axis fixed, and contraction or expansion along the y-axis while keeping the x-axis fixed. Vertical flipping is not applicable to borehole data because it does not preserve depositional sequence. Image rotation and cropping are also not applicable to borehole images because they do not preserve fracture plane continuity along the image or cannot represent breakouts, for example, which appear in pairs in the image, 180 degrees apart from each other. Furthermore, these operations are limited to the amount of available data. One may argue that applying these procedures might not generate different fracture scenarios once they transform the same fracture into similar examples, which contains the same rock matrix texture and the same inner fracture texture, resulting in poor model training and overfitting. **Figure 3** illustrates data augmentation procedures applied to a borehole image 300, according to an embodiment.

As previously mentioned, the method described herein may create a reliable and accurate training dataset for supervised deep learning models to detect fractures in acoustic borehole images. To achieve this, the method may include selecting or receiving an unfractured background. This allows for the deliberate introduction of a fracture. Pixel-accurate labels may be generated for each fracture. Ensuring that there are no pre-existing fractures in the background image can eliminate the risk of unmarked features that might confuse the model during training.

The method may also include applying histogram equalization to the background images. The objective of such image standardization technique is to reduce the variability of acoustic amplitude values acquired by different tools, ensuring the consistency and compatibility across the dataset from different wells and reservoirs. Once the main characteristics are accounted for, the method may include identifying geological features based upon the contrast and geometry rather than the acoustic amplitude values.

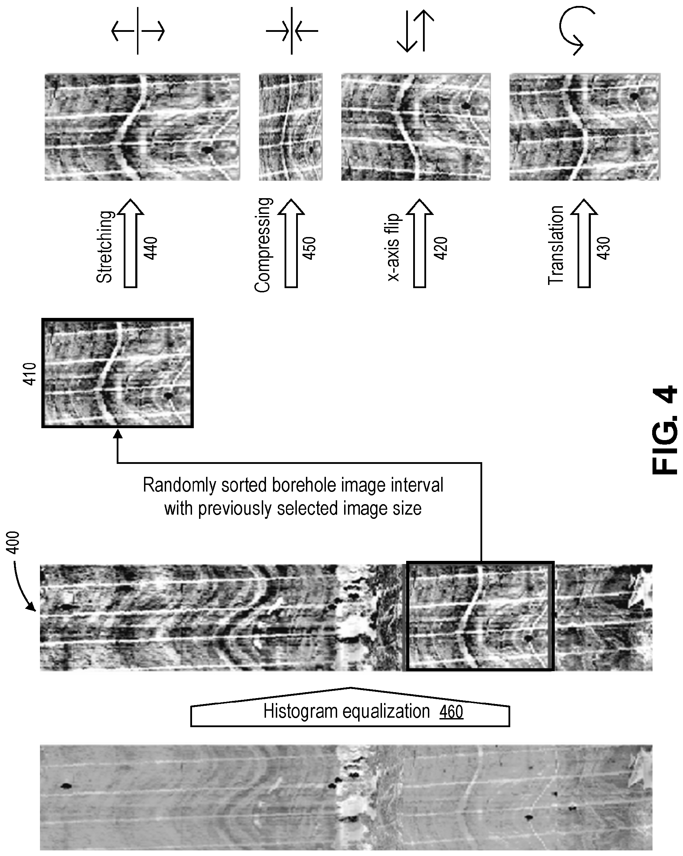

**Figure 4** illustrates a schematic view of background selection and data augmentation, according to an embodiment. The method may also include (e.g., randomly) selecting a portion of a borehole image 400 (e.g., with a size provided by the user) along the unfractured borehole image offered as background. Some of the available data augmentation processes described above may be applied to augment the background image segments independently, namely rotations on the x-axis keeping the y-axis fixed 420, left-right flip, image translation on x-axis 430, stretching 440, and compression 450, increasing background examples while honoring depositional and structural geology aspects, as well as borehole geometry.

Borehole images capture the unwrapped internal surface of a cylindrical wellbore, and the planes intersecting the borehole cylinder, such as fracture planes, may appear with a sinusoidal geometry across the x-axis of the borehole. Thus, the method may also include creating the synthetic fractures, represented as sinusoidal functions described below: $f \left(x\right) = A sin \left(Bx+C\right) + D ,$ (1) where *A* and *B* refer to the amplitude and period of the sinusoidal function, respectively, *C* represents the sinusoidal function translation in the x-axis, and *D* represents an eventual y-axis shift. The period of the sinusoid may be equal to 2*π*. Thus, *B* may be selected as: $B = \frac{2 π}{{N}_{x}} ,$ (2) where *Nₓ* refers to the number of pixels in the *x*-axis.

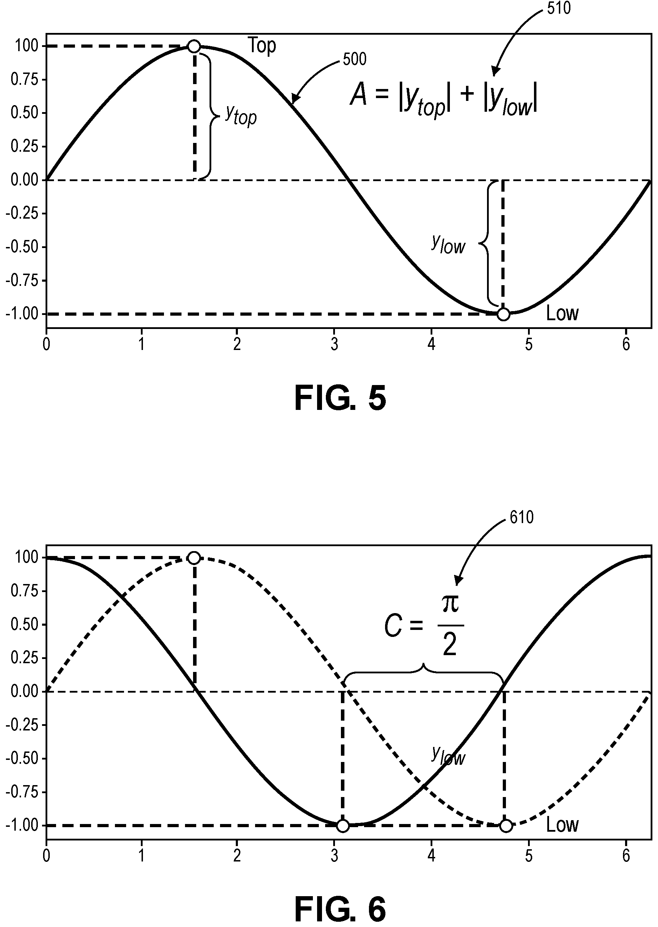

**Figure 5** illustrates the fracture dip height 510 of a synthetic fracture 500, according to an embodiment. Selecting *B* as shown in Equation (2) ensures that the sine wave ends on the right side of the image at the same y-axis position as it starts on the left, honoring the 1-period sine wave that represents the fracture plane crossing the borehole cylinder. The sinusoid amplitude, parameter A, corresponds to a fracture feature known as dip height 510, depicted in **Figure 5**, which controls the distance between the top and lowest sinusoid points. The dip height 510 also controls the angle between fracture plane and borehole axis and is represented as fracture dip in the following equation: $fracture dip = arctan \left(\frac{dip height}{borehole diameter}\right) .$ (3)

Thereby, parameter *A* can be selected by a distribution (e.g., provided by the user) according to the desired scenario. For general cases, selecting *A* randomly using a uniform distribution from zero pixels to y-axis length pixels may cover scenarios with low and high fracture dips.

**Figure 6** illustrates a translation in the X-axis, according to an embodiment. Parameter *C* controls the translation of the sinusoid in the x-axis and represents the angle of the fracture plane measured clockwise from a reference direction (e.g., true north), indicating the orientation of the fracture in the horizontal plane. In **Figure 6**, selecting $C = \frac{π}{2}$ results in translating the dashed sinusoid into the solid sinusoid by $\frac{π}{2}$, reproducing scenarios of fractures with different orientations, or azimuths.

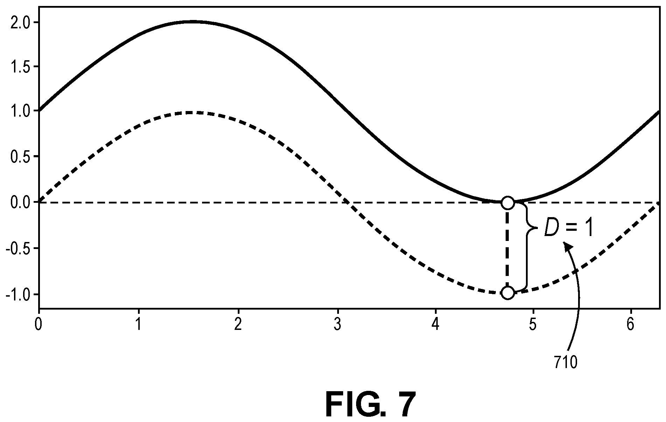

**Figure 7** illustrates a translation in the Y-axis, according to an embodiment. Parameter *D* represents the central position of sinusoidal function in the y-axis. This procedure generates a generic dataset, enabling proper deep learning model training capable of detecting fractures at different y-axis positions in the image. **Figure 7** shows an example of a 1-pixel translation.

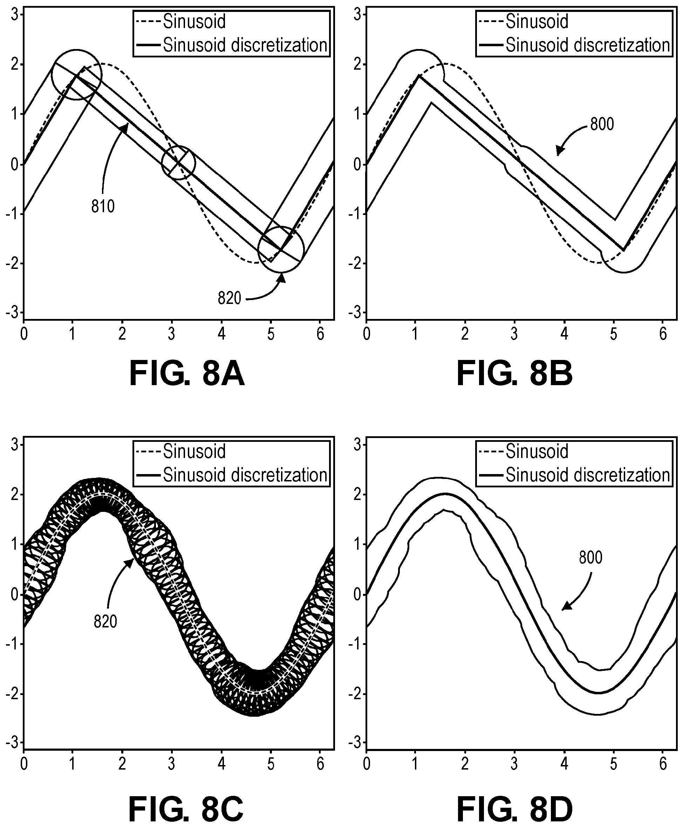

**Figures 8A-8D** illustrate a fracture thickness calculation, according to an embodiment. More particularly, **Figures 8A** and **8B** show a low sinusoid discretization, whereas **Figures 8C** and **8D** show a sinusoid discretization that is equal to the X-axis discretization. In order to represent the fracture thickness, including its variability and width along x-axis, a discretized sinusoidal function may be adopted that uses geometric shapes to determine its width. This may include discretizing the sinusoid in *n* user-defined segments and drawing a rectangle with length equal to the sinusoid segment length and a one-dimensional Gaussian random width. Then, a circle with diameter equal to the largest rectangle width may be added to join the rectangles at each discretization point. This process is illustrated in **Figures 8A-8D**. According to the parametrization, the fracture thickness can emulate the geological scenario and create enlarged fractures, such as those affected by dissolution processes.

**Table 1** summarizes the minimum and maximum values of sinusoidal function parameters range. The parameters can be randomly selected from a distribution or selected according to a known scenario. The benefit of having them sorted by input distributions is that the semisynthetic dataset can be adapted to the specific problem they are dealing with. For example, if the fractures are to be detected in a media known to contain several high-dip fractures, the semisynthetic dataset can be customized to meet the user's standards.

**Table 1: Range of fracture parameters.**

| ATTRIBUTES | RANGE | | |
|---|---|---|---|
| | Minimum | Maximum | unit |
| A (amplitude) | 0 | y-axis length | pixels |
| B (period) | 0 | 2π/(x-axis length) | rad |
| C (phase) | 0 | 2π | rad |
| D (position) | 0 | y-axis length | pixels |
| Aperture | $\sqrt{amplitude} / 4$ | $\sqrt{amplitude} / 2$ | pixels |

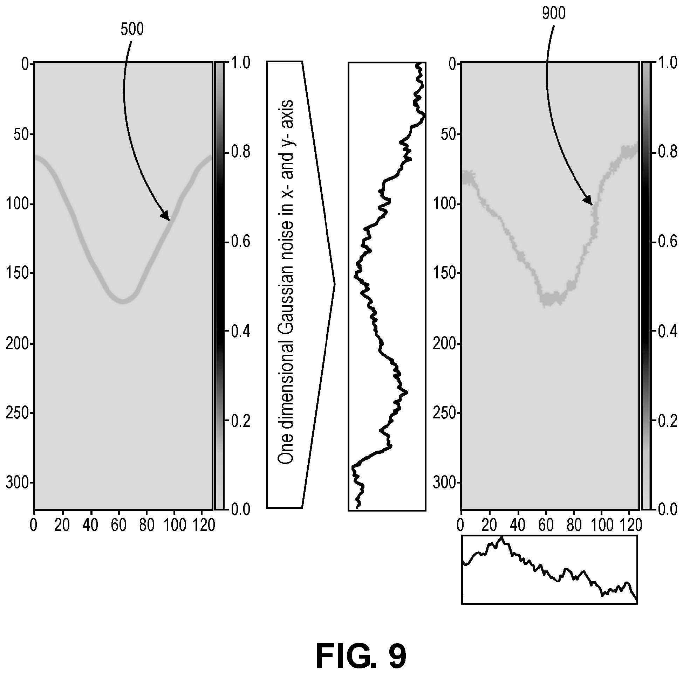

**Figure 9** illustrates adding one-dimensional Gaussian noise to the X-axis and the Y-axis, according to an embodiment. The mathematical operations applied to delineate a sinusoidal synthetic fracture generate delineated fractures along its axis, which may be unfeasible for real cases. Seeking to emulate fracture plane roughness and create fracture characteristics more similar to those in nature, a one-dimensional Gaussian simulation for both X- and Y-axis may be applied to the fracture path, consequently reducing the sinusoid's perfect delineation, as depicted in **Figure 9**.

The method may generate multiple sinusoids within the same image portion, emulating the scenarios of highly fractured intervals. Generating multiple sinusoids can be achieved by applying a loop to stamp a sinusoidal function repeatedly. As a result, the proposed technique is versatile, being adapted to any formation according to its particular characteristics.

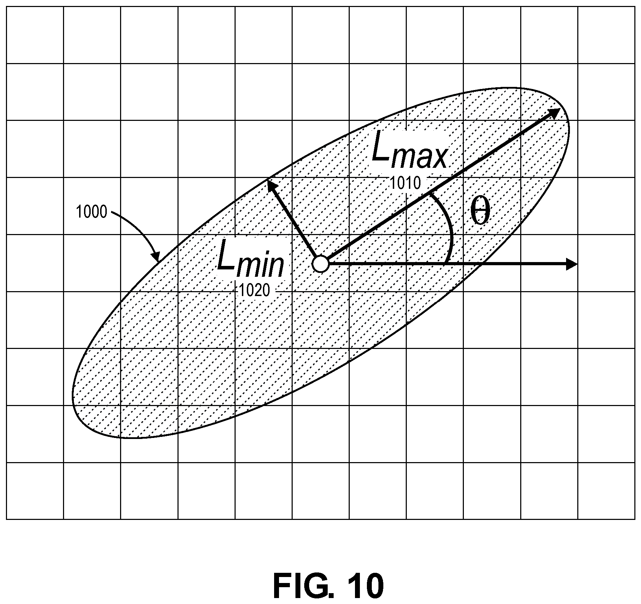

**Figure 10** illustrates parameters *Lₘᵢₙ*, *Lₘₐₓ*, and *θ* in the influence zone of each pixel (*pₓ*, *p_{y}*), according to an embodiment. The method may also include defining the fracture inner texture and the fracture type. For that, two-dimensional Gaussian maps may be used. This may include determining the influence zone of each pixel (*pₓ*, *p_{y}*). This zone may be determined by two parameters, *Lₘᵢₙ* and *Lₘₐₓ*, which represent the two axes 1010, 1020 of an ellipse 1000. Once the parameters are defined, the user may determine the inclination angle *θ* of the influence zone for each pixel and rotate them using the rotation matrix. This influence zone is depicted in **Figure 10**.

As a result, the method may transform the pixels into a new pair, defined as: $\left(\begin{matrix}{p}_{x}^{new} \\ {p}_{y}^{new}\end{matrix}\right) = \left(\begin{matrix}cos \left(θ\right) & sin \left(θ\right) \\ - sin \left(θ\right) & cos \left(θ\right)\end{matrix}\right) \left(\begin{matrix}\frac{{p}_{x}}{{L}_{min}} \\ \frac{{p}_{y}}{{L}_{max}}\end{matrix}\right) .$ (4)

The following determines the covariance correlation between any new pair of image pixels ( ${p}_{x}^{new} , {p}_{y}^{new}$). This covariance correlation is distance-based (i.e., the variable is the Euclidean distance between the pixels). In this example, the spherical covariance correlation *s* is used, computed as: $s \left(h\right) = \left\{\begin{matrix}1 - \frac{3}{2} h + \frac{{h}^{3}}{2} , if h < 1 \\ 0 , otherwise\end{matrix},\right.$ (5) where *h* is the Euclidean distance between ${p}_{x}^{new}$ and ${p}_{y}^{new}$. Following these procedures, the method may determine the covariance matrix *Cₘ*. The method may perform Gaussian simulations using the following equation: $Gaussian simulation = mean + \sqrt{{C}_{m}} N \left(0, 1\right) ,$ (6) where $\sqrt{{C}_{m}}$ is the Cholesky decomposition of *Cₘ* and 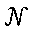 (0, 1) is a vector randomly sorted from a Gaussian distribution with mean equals to zero and standard deviation equals to one. The shape of 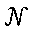 (0, 1) is equal to (*Nₓ*, *N_{y}*), which refers to the image shape. The positive values of the two-dimensional Gaussian map mimics high acoustic amplitude fractures (i.e., closed) while the negative values simulate low acoustic amplitude fractures (i.e., open). As a result, a vast scenario of fracture occurrence can be represented by combining randomly chosen unfractured background textures with randomly defined fracture geometries, type, thickness, and inner texture.

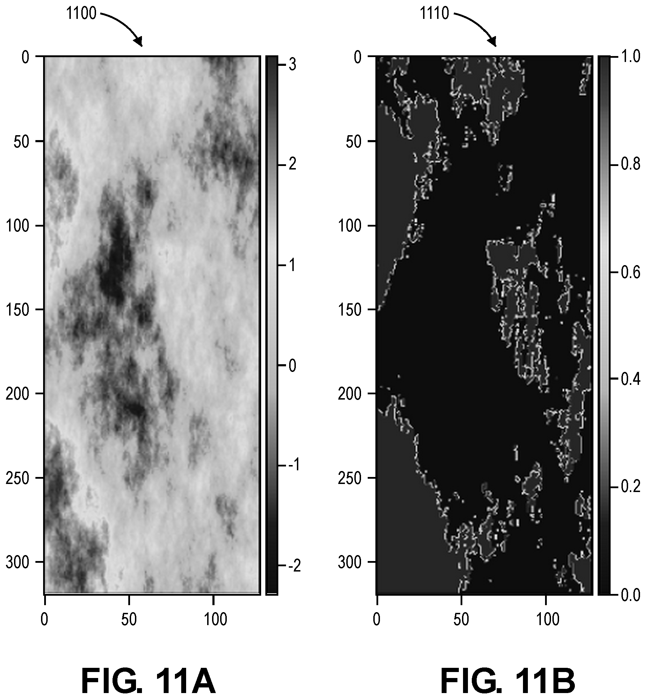

To simulate discontinuous fractures and reduce their synthetic aspects, a truncated two-dimensional Gaussian map may be used to define fracture continuity by using a secondary two-dimensional Gaussian map. The secondary map may be derived from the primary map previously described by applying a truncation threshold. The fracture may be imprinted in regions with values above the threshold. In regions with values below threshold, the fractures may not occur, representing the discontinuities of fracture plans and emulating chemical reactions, compaction, and tectonics events. Intending to increase uncertainty and robustness, the truncation parameter may be randomly selected from a uniform distribution ranging from 0.25 to 0.75. **Figures 11A** and **11B** illustrate a two-dimensional Gaussian map, used to simulate fracture inner texture, and its secondary map, used to emulate fracture continuity, with a threshold equal to 0.5, according to an embodiment. The area with negative values (i.e., the area with a truncated value below the threshold) cannot create fractures. In contrast, the area with positive values (i.e., the area above threshold) can create fractures.

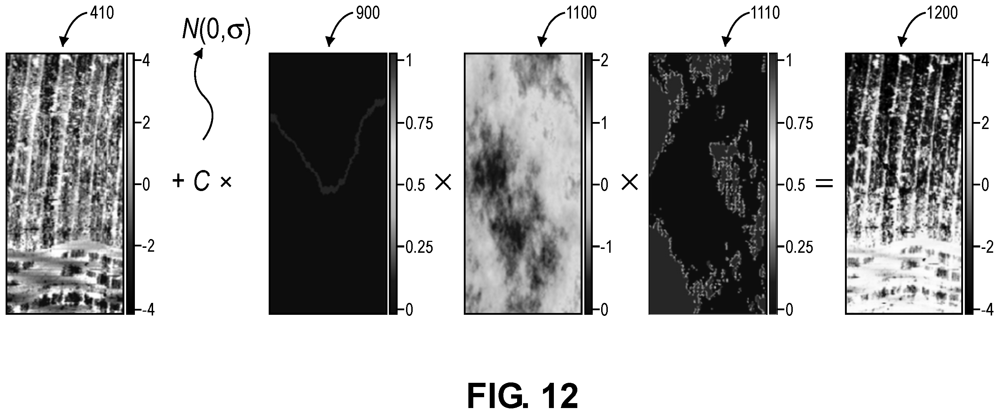

**Figure 12** illustrates a synthetic fracture imprint to the borehole image unfractured background, according to an embodiment. The primary and secondary Gaussian maps may be combined with the final sinusoidal label. A weighting factor (e.g., sorted from 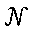 (0, 1)) may be applied to magnify or reduce the amplitude contrast related to the background. The final map may be added to the standardized background, following the procedure depicted in **Figure 12**.

As described in Equation 5, the two-dimensional Gaussian map has a mean equal to zero and a standard deviation equal to one. Therefore, some fractures may be randomly added to portions where the Gaussian map values are close to 0, resulting in a subjective fracture with a low inner texture disturbance. To prevent such scenarios, an automated method based on singular value decomposition (SVD) may be used to determine whether a fracture appears too subjective or too synthetic and, therefore, should be removed from dataset. The concept involves comparing the singular values determined based upon the unfractured background and from the synthetically fractured background.

Verifying that the singular values change when the synthetic fracture is added to the background is straightforward. The goal is to create a synthetic fracture that moderately affects these singular values without making a large difference. If background singular values change by less than a lower threshold amount after creating the synthetic fracture, or change by more than an upper threshold amount, the synthetic fracture should be removed in both cases. Two parameters are created to control how much the singular values are affected after the synthetic fracture is imprinted to the unfractured background. The first is the spectro_sum, which sums the singular values from the SVD decomposition of the background and the background with the synthetic fracture, depicted in Equation 7. $spectro_sum = {\sum }_{i = 1}^{N} {σ}_{i}$ (7)

The second parameter is the max_distance, which measures the maximum distance among the singular values between the unfractured background and the background with the synthetic fracture, depicted in Equation 8. $max_distance = max {\left\{\left|{σ}_{i}^{A}-{σ}_{i}^{B}\right|\right\}}_{i = 1}^{N}$ (8)

In Equations 7 and 8, *N* stands for the number of singular values, and *σ* refers to the singular value. In Equation 8, the superscript A refers to the singular value of the unfractured background, while the superscript B refers to the singular value of the background with the synthetic fracture.

A substantial set of synthetically fractured borehole images may be generated and spectro_sum and max_distance values may be calculated. Finally, 10^{th} and 90^{th} percentiles of both parameters may be used as minimum and maximum threshold values to remove subjective fractures below minimum threshold and artificial fractures above maximum threshold.

The final product of the method includes an image pair for supervised machine learning models training a standardized grayscale borehole image, synthetically fractured, and its pixel-precise label. The image pair may be optimal for semantic segmentation purposes as well as for fracture characterization, once the fracture region is precisely delimited.

In summary, a data standardization procedure may be adopted to ensure pixel values are within a consistent range not dependent upon the acquisition tool and data processing, as well as to highlight the contrast between the fracture and rock matrix. Conventional data augmentation techniques that honor geology may be applied to the unfractured background, such as horizontal flipping, translation, compression, and stretching. Mathematical simulations may be used to mimic fracture geometry, inner texture, thickness, type, and roughness and create a pixel-precise label. The synthetic fracture is then imprinted to the unfractured backgrounds.

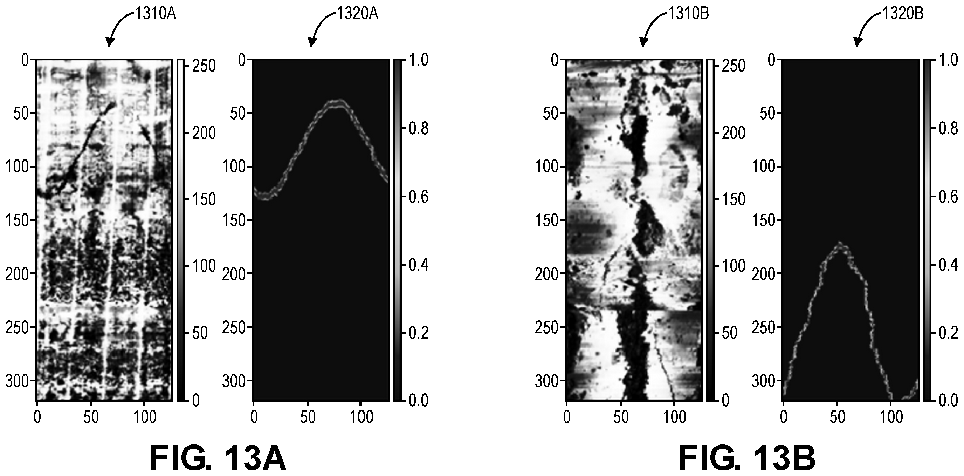

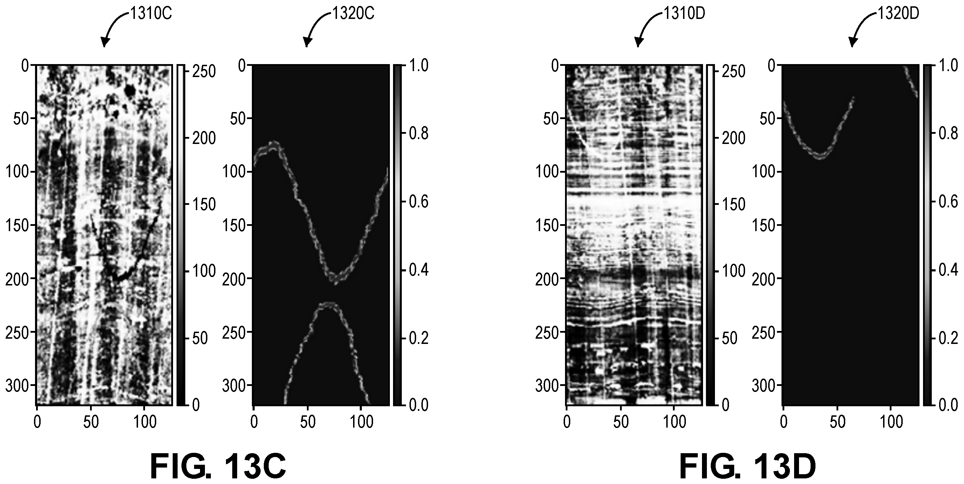

The method produces an accurate and reliable training dataset which overcomes two challenges related to borehole image fracture interpretation: lack of annotation functionalities on petrotechnical software used for borehole image processing and time-consuming manual annotation efforts. Furthermore, the method is versatile and scalable, allowing background image substitution and synthetic fracture parametrization according to the desired scenario, as well as generating a large-scale pixel-precise image-label pair within couple hours. **Figures 13A-13D** illustrate examples of synthetic fractures imprinted to borehole images and their respective labels, created with borehole images from different vendors, according to an embodiment. More particularly, **Figure 13A** shows an image 1310A of a medium dip thick partially open fracture on Well A from Field A imprinted to borehole image 1320A from vendor A. **Figure 13B** shows an image 1320A of a high dip thin open fracture on Well B from Field B imprinted to borehole image 1320B from vendor B. **Figure 13C** shows an image 1310C of a high dip partially open fracture and high dip thick closed fracture on Well B from Field A imprinted to borehole image 1320C from vendor A. **Figure 13D** shows an image 1310D of a medium dip closed fracture on Well B from Field A imprinted to borehole image 1320D from vendor A.

### Exemplary method

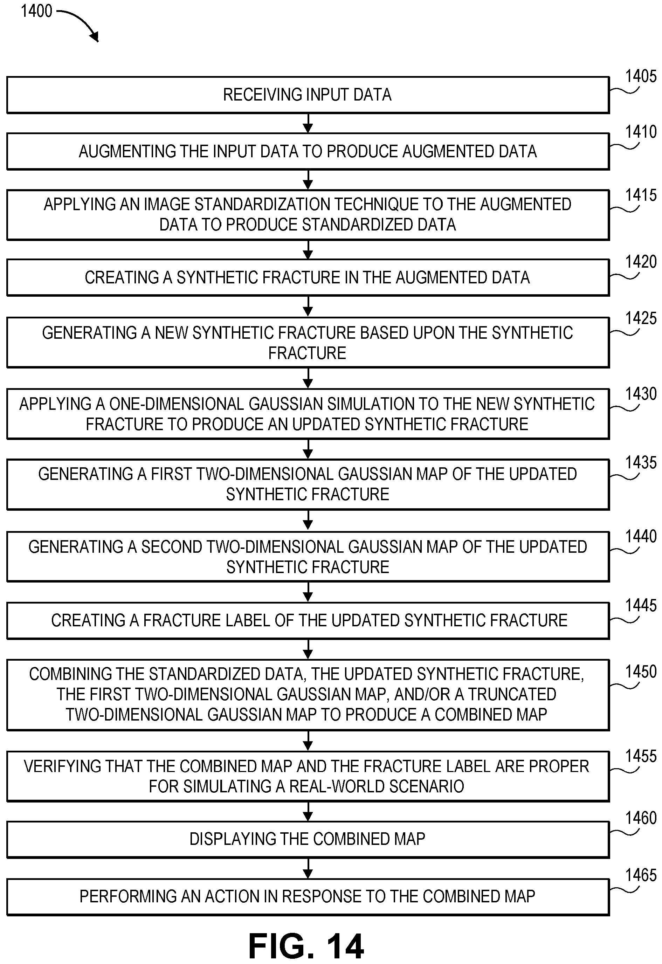

**Figure 14** illustrates a flowchart of a method 1400 for creating a synthetic fracture that mimics data in a borehole image, according to an embodiment. More particularly, the method 1400 may (e.g., effortlessly and promptly) create standardized labelled images to train deep learning models for fracture detection. An illustrative order of the method 1400 is provided below; however, one or more portions of the method 1400 may be performed in a different order, simultaneously, repeated, or omitted. At least a portion of the method 1400 may be performed with a computing system (described below).

The method 1400 may include receiving input data, as at 1405. The input data may be or include a background image 400 of a borehole. The background image 400 may have no detectable fractures therein.

The method 1400 may also include augmenting the input data to produce augmented data, as at 1410. The input data may be augmented by (1) selecting a portion 410 of the input data, and (2) performing a left-right flip 420 of the selected portion, performing a translation 430 on the X-axis of the selected portion, stretching 440 the selected portion, compressing 450 the selected portion, or a combination thereof.

The method 1400 may also include applying an image standardization technique to the augmented data to produce standardized data, as at 1415. The image standardization technique may be or include a histogram equalization 460.

The method 1400 may also include creating a (e.g., first) synthetic fracture 500 in the augmented data, as at 1420. The synthetic fracture 500 may be represented as a sinusoidal function 500 in the borehole image 400. The synthetic fracture 500 may be created based upon an amplitude of the of the sinusoidal function 500, a period of the sinusoidal function 500, a translation 610 of the sinusoidal function 500 with respect to the X-axis, and/or a central position 710 of the sinusoidal function 500 in the Y-axis. The amplitude corresponds to a dip height 510 which controls (1) a distance between a highest point and a lowest point of the sinusoidal function 500 and/or (2) an angle between a fracture plane of the synthetic fracture 500 and a plane perpendicular to a central longitudinal axis of the borehole. The period of the sinusoidal function 500 is 2π. The translation 610 of the sinusoidal function 500 with respect to the X-axis represents a direction measured clockwise from a reference direction toward which the fracture plane dips. The translation 610 indicates an orientation of the synthetic fracture 500 with respect to a geographic reference. In an example, the geographic reference may be true north.

The method 1400 may also include generating a new (e.g., second) synthetic fracture 800 based upon the synthetic fracture 500, as at 1425. Generating the new synthetic fracture 800 may include discretizing the sinusoidal function 500 to represent the synthetic fracture 500 in *n* segments (**Figure 8A**) to produce a discretized sinusoidal function (**Figures 8B** and **8D**). Generating the new synthetic fracture (**Figures 8B** and **8D**) may also include adding a rectangle 810 with a length equal to a segment length of the discretized sinusoidal function (**Figures 8A** and **8C**). A width of the rectangle 810 may be random. Generating the new synthetic fracture (**Figures 8B** and **8D**) may also include adding a circle 820 with a diameter equal to a largest width of the rectangle 810 to each point of the discretized sinusoidal function to join the 810 of consecutive segments to produce a new discretized sinusoidal function with irregular thickness. The new the discretized sinusoidal function with irregular thickness represents the new synthetic fracture 800 (**Figures 8B** and **8D**).

The method 1400 may also include applying a one-dimensional Gaussian simulation to the new synthetic fracture 800 (**Figure 8D**) to produce an updated (e.g., third) synthetic fracture 900, as at 1430. The one-dimensional Gaussian simulation may reduce a sinusoid perfect delineation of the new synthetic fracture 800 (**Figure 8D**) and/or emulate fracture plane roughness.

The method 1400 may also include generating a first two-dimensional Gaussian map 1100 of the updated synthetic fracture 900, as at 1435. The first two-dimensional Gaussian map 1100 may emulate an inner texture of the updated synthetic fracture 900, which is used to generate different types of fractures. Generating the first two-dimensional Gaussian map 1100 may include determining an influence zone 1000 of each pixel of the updated synthetic fracture. The influence zone 1000 may be determined based upon a major axis 1010 and a minor axis 1020 of an ellipse corresponding to the updated synthetic fracture 900. Generating the first two-dimensional Gaussian map 1100 may also include determining an inclination angle (**Figure 10** angle *θ*) of the influence zone of each pixel. The inclination angle (**Figure 10** angle *θ*) may be determined based upon the major axis 1010 of the ellipse. Generating the first two-dimensional Gaussian map 1100 may also include transforming the pixels into a new pair. The pixels may be transformed based upon the major 1010 and minor 1020 axes and the inclination angle (**Figure 10** angle *θ*). The pixels may be transformed using a rotation matrix. Generating the first two-dimensional Gaussian map 1100 may also include determining a covariance correlation between the new pair of the pixels. The covariance correlation may be determined based upon a Euclidian distance between the pixels in the new pair. Generating the first two-dimensional Gaussian map 1100 may also include determining a covariance matrix based upon the covariance correlation. Generating the first two-dimensional Gaussian map 1100 may also include generating the first two-dimensional Gaussian map of the updated synthetic fracture 900 based upon the covariance matrix. Positive values (if colormap adapted, can reference positive regions of **Figure 11A**) of the first two-dimensional Gaussian map 1100 may simulate first acoustic amplitude fractures that are above a first threshold that simulates a closed fracture. Negative values (if colormap adapted, can reference negative regions of **Figure 11A**) of the first two-dimensional Gaussian map 1100 may simulate second acoustic amplitude fractures that are below a second threshold that simulates an open fracture.

The method 1400 may also include generating a second two-dimensional Gaussian map of the updated synthetic fracture 900, as at 1440. A normalized two-dimensional Gaussian map may be generated by normalizing the second two-dimensional Gaussian map. A truncated two-dimensional Gaussian map 1110 may be generated by applying a truncation threshold to the normalized two-dimensional Gaussian map. The truncation threshold may be a uniformly random truncation parameter between 0.25 and 0.75. The truncated two-dimensional Gaussian map 1100 may emulate a continuity of the synthetic fracture 500. The updated synthetic fracture 900 may be imprinted in regions above (if colormap adapted, can reference '1.0' regions of **Figure 11B**) the truncation threshold, and the synthetic fracture 500 may not occur in regions below (if colormap adapted, can reference '0.0' regions of **Figure 11B**) the truncation threshold.

The method 1400 may also include creating a fracture label of the updated synthetic fracture 900, as at 1445. The fracture label of the updated synthetic fracture 900 may be created by imprinting the updated synthetic fracture 900 to an empty image to produce a binary mask 1320A, 1320B, 1320C, 1320D. The truncated two-dimensional Gaussian map 1110 may emulate a continuity of the fracture label. The fracture label may be imprinted in the regions above (if colormap adapted, can reference '1.0' regions of **Figure 11B**) the truncation threshold, and the fracture label may not occur in the regions below (if colormap adapted, can reference '0.0' regions of **Figure 11B**) the truncation threshold. The binary mask 1320A, 1320B, 1320C, 1320D may be used as a ground truth for training one or more supervised machine learning models.

As shown in **Figure 12**, the method 1400 may also include combining the standardized data 410, the updated synthetic fracture 900, the first two-dimensional Gaussian map 1100, and/or the truncated two-dimensional Gaussian map 1110 to produce a combined map 1200, as at 1450. As shown in **Figures 13A-13D**, combining may include multiplying the updated synthetic fracture 900, the first two-dimensional Gaussian map 1100, and/or the truncated two-dimensional Gaussian map 1110 to produce a product. The product may also include a weighting factor (C in **Figure 12**). Combining may also include adding the product to the standardized data 410 to produce the combined map 1200.

The method 1400 may also include verifying that the combined map 1200 and the fracture label are proper for simulating a real-world scenario, as at 1455. Verifying may include calculating a sum of singular values from a singular value decomposition (SVD) of the standardized data 410 and the combined map 1200. Verifying may also include calculating a maximum Euclidian distance among the singular values from the singular value decomposition (SVD) of the standardized data 410 and the combined map 1200. Verifying may also include verifying that the sum of the singular values and the maximum Euclidian distance are between verification thresholds. The verification thresholds may include a minimum threshold and a maximum threshold. Verifying may also include disregarding the combined map 1200 and the fracture label below the minimum threshold and above the maximum threshold. The sum of the singular values and the maximum Euclidian below the minimum verification threshold may represent subjective fractures that do not apply a disturbance in the standardized data. The sum of the singular values and the maximum Euclidian above the maximum verification threshold may represent artificial fractures.

The method 1400 may also include displaying the combined map 1200, as at 1460. This may also or instead include displaying the synthetic fracture, the new synthetic fracture 800, the updated synthetic fracture 900, the first two-dimensional Gaussian map 1100, the second two-dimensional Gaussian map, the normalized two-dimensional Gaussian map, the truncated two-dimensional Gaussian map 1110, the fracture label, or a combination thereof.

The method 1400 may also include performing an action in response to the combined map 1200, as at 1465. The action may also or instead be in response to the synthetic fracture, the new synthetic fracture 800, the updated synthetic fracture 900, the first two-dimensional Gaussian map 1100, the second two-dimensional Gaussian map, the normalized two-dimensional Gaussian map, the truncated two-dimensional Gaussian map 1110, the fracture label, or a combination thereof. In one embodiment, the action may be or include selecting a completion site and/or forecasting production. In another embodiment the action may be or include generating and/or transmitting a signal that recommends, instructs, or causes a physical action to occur at a wellsite. The physical action may be or include selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or a combination thereof.

### Exemplary Computing System

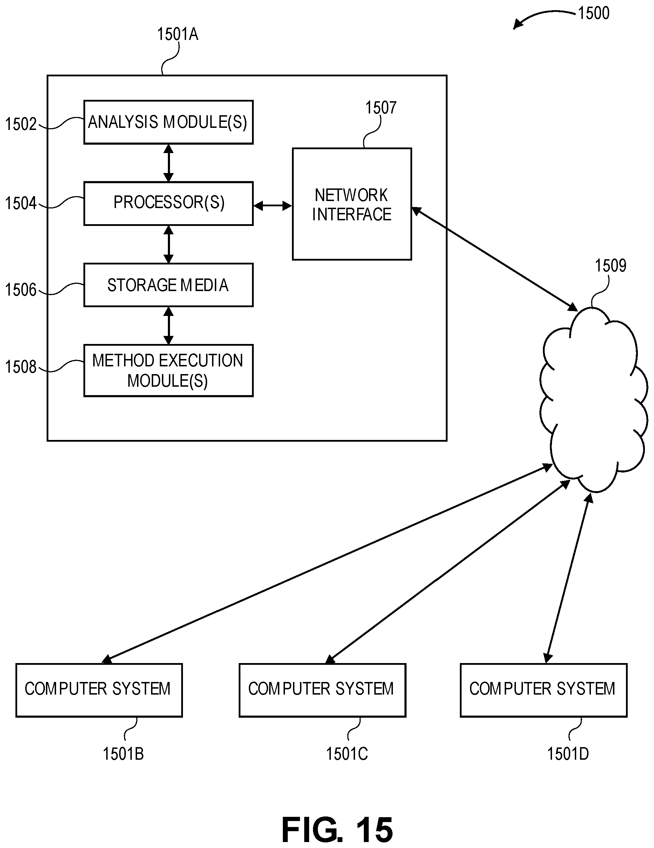

In some embodiments, the methods of the present disclosure may be executed by a computing system. **Figure 15** illustrates an example of such a computing system 1500, in accordance with some embodiments. The computing system 1500 may include a computer or computer system 1501A, which may be an individual computer system 1501A or an arrangement of distributed computer systems. The computer system 1501A includes one or more analysis modules 1502 that are configured to perform various tasks according to some embodiments, such as one or more methods disclosed herein. To perform these various tasks, the analysis module 1502 executes independently, or in coordination with, one or more processors 1504, which is (or are) connected to one or more storage media 1506. The processor(s) 1504 is (or are) also connected to a network interface 1507 to allow the computer system 1501A to communicate over a data network 1509 with one or more additional computer systems and/or computing systems, such as 1501B, 1501C, and/or 1501D (note that computer systems 1501B, 1501C and/or 1501D may or may not share the same architecture as computer system 1501A, and may be located in different physical locations, e.g., computer systems 1501A and 1501B may be located in a processing facility, while in communication with one or more computer systems such as 1501C and/or 1501D that are located in one or more data centers, and/or located in varying countries on different continents).

A processor may include a microprocessor, microcontroller, processor module or subsystem, programmable integrated circuit, programmable gate array, or another control or computing device.

The storage media 1506 may be implemented as one or more computer-readable or machine-readable storage media. Note that while in the example embodiment of **Figure 15** storage media 1506 is depicted as within computer system 1501A, in some embodiments, storage media 1506 may be distributed within and/or across multiple internal and/or external enclosures of computing system 1501A and/or additional computing systems. Storage media 1506 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above may be provided on one computer-readable or machine-readable storage medium, or may be provided on multiple computer-readable or machine-readable storage media distributed in a large system having possibly plural nodes. Such computer-readable or machine-readable storage medium or media is (are) considered to be part of an article (or article of manufacture). An article or article of manufacture may refer to any manufactured single component or multiple components. The storage medium or media may be located either in the machine running the machine-readable instructions, or located at a remote site from which machine-readable instructions may be downloaded over a network for execution.

In some embodiments, computing system 1500 contains one or more method execution module(s) 1508. In the example of computing system 1500, computer system 1501A includes the method execution module 1508. In some embodiments, a single method execution module may be used to perform some aspects of one or more embodiments of the methods disclosed herein. In other embodiments, a plurality of method execution modules may be used to perform some aspects of methods herein.

It should be appreciated that computing system 1500 is merely one example of a computing system, and that computing system 1500 may have more or fewer components than shown, may combine additional components not depicted in the example embodiment of **Figure 15**, and/or computing system 1500 may have a different configuration or arrangement of the components depicted in **Figure 15**. The various components shown in **Figure 15** may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of the present disclosure.

Computational interpretations, models, and/or other interpretation aids may be refined in an iterative fashion; this concept is applicable to the methods discussed herein. This may include use of feedback loops executed on an algorithmic basis, such as at a computing device (e.g., computing system 1500, **Figure 15**), and/or through manual control by a user who may make determinations regarding whether a given step, action, template, model, or set of curves has become sufficiently accurate for the evaluation of the subsurface three-dimensional geologic formation under consideration.

The foregoing description, for purposes of explanation, has been described with reference to specific embodiments. However, the illustrative discussions above are not intended to be exhaustive or limiting to the precise forms disclosed. Many modifications and variations are possible in view of the above teachings. Moreover, the order in which the elements of the methods described herein are illustrated and described may be re-arranged, and/or two or more elements may occur simultaneously. The embodiments were chosen and described in order to best explain the principles of the disclosure and its practical applications, to thereby enable others skilled in the art to best utilize the disclosed embodiments and various embodiments with various modifications as are suited to the particular use contemplated.

## Claims

1. A method for creating a synthetic fracture, the method comprising:
receiving input data, wherein the input data comprises a background image of a borehole, and wherein the background image has no detectable fractures therein;
augmenting the input data to produce augmented data; and
creating a synthetic fracture in the augmented data, wherein the synthetic fracture is represented as a sinusoidal function in the borehole image,
preferably further comprising displaying the synthetic fracture.

2. The method of claim 1, wherein the synthetic fracture is created based upon an amplitude of the of the sinusoidal function, a period of the sinusoidal function, a translation of the sinusoidal function with respect to an X-axis, and/or a central position of the sinusoidal function in a Y-axis.

3. The method of claim 1 or 2, further comprising:
generating a new synthetic fracture based upon the synthetic fracture; and
applying a one-dimensional Gaussian simulation to the new synthetic fracture for an X-axis and a Y-axis to produce an updated synthetic fracture.

4. The method of claim 3, further comprising
generating a two-dimensional Gaussian map of the updated synthetic fracture, wherein the two-dimensional Gaussian map emulates an inner texture of the updated synthetic fracture and/or
generating a two-dimensional Gaussian map of the updated synthetic fracture, wherein a normalized two-dimensional Gaussian map is generated by normalizing the two-dimensional Gaussian map and/or
creating a fracture label of the updated synthetic fracture, wherein the fracture label is created by imprinting the updated synthetic fracture to an empty image to produce a binary mask.

5. The method of any one of the preceding claims, further comprising:
generating a new synthetic fracture based upon the synthetic fracture;
applying a one-dimensional Gaussian simulation to the new synthetic fracture for an X-axis and a Y-axis to produce an updated synthetic fracture;
generating a first two-dimensional Gaussian map of the updated synthetic fracture, wherein the first two-dimensional Gaussian map emulates an inner texture of the updated synthetic fracture; and
generating a two-dimensional Gaussian map of the updated synthetic fracture, wherein a truncated two-dimensional Gaussian map is generated based upon the two-dimensional Gaussian map.

6. The method of claim 5, further comprising combining the updated synthetic fracture, the first two-dimensional Gaussian map, and the truncated two-dimensional Gaussian map to produce a combined map.

7. The method of any one of the preceding claims, further comprising performing a physical action at a wellsite in response to the synthetic fracture, wherein the physical action comprises selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or a combination thereof.

8. A computing system, comprising:
one or more processors; and
a memory system comprising one or more non-transitory computer-readable media storing instructions that, when executed by at least one of the one or more processors, cause the computing system to perform operations, the operations comprising:
receiving input data, wherein the input data comprises a background image of a borehole, and wherein the background image has no detectable fractures therein;
augmenting the input data to produce augmented data;
applying an image standardization technique to the augmented data to produce standardized data;
creating a synthetic fracture in the augmented data, wherein the synthetic fracture is represented as a sinusoidal function in the borehole image;
generating a new synthetic fracture based upon the synthetic fracture;
applying a one-dimensional Gaussian simulation to the new synthetic fracture to produce an updated synthetic fracture;
generating a first two-dimensional Gaussian map of the updated synthetic fracture;
generating a second two-dimensional Gaussian map of the updated synthetic fracture, wherein a truncated two-dimensional Gaussian map is generated based upon the second two-dimensional Gaussian map; and
combining the standardized data, the updated synthetic fracture, the first two-dimensional Gaussian map, and the truncated two-dimensional Gaussian map to produce a combined map.

9. The computing system of claim 8, wherein the synthetic fracture is created based upon an amplitude of the of the sinusoidal function, a period of the sinusoidal function, a translation of the sinusoidal function with respect to an X-axis, and/or a central position of the sinusoidal function in a Y-axis, wherein the amplitude corresponds to a dip height which controls (1) a distance between a highest point and a lowest point of the sinusoidal function and (2) an angle between a fracture plane of the synthetic fracture and a plane perpendicular to a central longitudinal axis of the borehole, wherein the period of the sinusoidal function is 2π, wherein the translation of the sinusoidal function with respect to the X-axis represents a direction measured clockwise from a reference direction toward which the fracture plane dips, wherein the translation indicates an orientation of the synthetic fracture with respect to a geographic reference, and wherein the geographic reference comprises true north.

10. The computing system of claim 8 or 9, wherein generating the new synthetic fracture comprises:
discretizing the sinusoidal function to represent the synthetic fracture in *n* segments to produce a discretized sinusoidal function;
adding a rectangle with a length equal to a segment length of the discretized sinusoidal function, wherein a width of the rectangle is random; and
adding a circle with a diameter equal to a largest width of the rectangle to each point of the discretized sinusoidal function to join the rectangles of consecutive segments to produce a new discretized sinusoidal function with irregular thickness, and wherein the new the discretized sinusoidal function with irregular thickness represents the new synthetic fracture.

11. The computing system of any one of the claims 8 - 10, wherein generating the first two-dimensional Gaussian map comprises:
determining an influence zone of each pixel of the updated synthetic fracture, wherein the influence zone is determined based upon a major axis and a minor axis of an ellipse corresponding to the updated synthetic fracture;
determining an inclination angle of the influence zone of each pixel, wherein the inclination angle is determined based upon the major axis of the ellipse;
transforming the pixels into a new pair, wherein the pixels are transformed based upon the major and minor axes and the inclination angle, and wherein the pixels are transformed using a rotation matrix;
determining a covariance correlation between the new pair of the pixels, wherein the covariance correlation is determined based upon a Euclidian distance between the pixels in the new pair;
determining a covariance matrix based upon the covariance correlation; and
generating the first two-dimensional Gaussian map of the updated synthetic fracture based upon the covariance matrix, wherein positive values of the first two-dimensional Gaussian map simulate first acoustic amplitude fractures that are above a first threshold that simulates a closed fracture, and wherein negative values of the first two-dimensional Gaussian map simulate second acoustic amplitude fractures that are below a second threshold that simulates an open fracture.

12. The computing system of any one of the claims 8 - 11, wherein the operations further comprise creating a fracture label of the updated synthetic fracture, wherein the fracture label is created by imprinting the updated synthetic fracture to an empty image to produce a binary mask, and wherein the binary mask is used as a ground truth for training one or more supervised machine learning models.

13. A non-transitory computer-readable medium storing instructions that, when executed by one or more processors of a computing system, cause the computing system to perform operations, the operations comprising:
receiving input data, wherein the input data comprises a background image of a borehole, and wherein the background image has no detectable fractures therein;
augmenting the input data to produce augmented data;
applying an image standardization technique to the augmented data to produce standardized data, wherein the image standardization technique comprises a histogram equalization;
creating a synthetic fracture in the augmented data, wherein the synthetic fracture is represented as a sinusoidal function in the borehole image, wherein the synthetic fracture is created based upon an amplitude of the of the sinusoidal function, a period of the sinusoidal function, a translation of the sinusoidal function with respect to an X-axis, and a central position of the sinusoidal function in a Y-axis;
generating a new synthetic fracture based upon the synthetic fracture;
applying a one-dimensional Gaussian simulation to the new synthetic fracture for the X-axis and the Y-axis to produce an updated synthetic fracture, wherein the one-dimensional Gaussian simulation reduces a sinusoid perfect delineation of the new synthetic fracture and emulates fracture plane roughness;
generating a first two-dimensional Gaussian map of the updated synthetic fracture, wherein the first two-dimensional Gaussian map emulates an inner texture of the updated synthetic fracture, which is used to generate different types of fractures;
generating a second two-dimensional Gaussian map of the updated synthetic fracture, wherein a normalized two-dimensional Gaussian map is generated by normalizing the second two-dimensional Gaussian map, wherein a truncated two-dimensional Gaussian map is generated by applying a truncation threshold to the normalized two-dimensional Gaussian map, wherein the truncated two-dimensional Gaussian map emulates a continuity of the synthetic fracture, wherein the updated synthetic fracture is imprinted in regions above the truncation threshold, and wherein the synthetic fracture does not occur in regions below the truncation threshold;
creating a fracture label of the updated synthetic fracture, wherein the fracture label of the updated synthetic fracture is created by imprinting the updated synthetic fracture to an empty image to produce a binary mask, wherein the truncated two-dimensional Gaussian map emulates a continuity of the fracture label, wherein the fracture label is imprinted in the regions above the truncation threshold, wherein the fracture label does not occur in the regions below the truncation threshold, and wherein the binary mask is used as a ground truth for training one or more supervised machine learning models; and
combining the standardized data, the updated synthetic fracture, the first two-dimensional Gaussian map, and the truncated two-dimensional Gaussian map to produce a combined map,
wherein the operations preferably further comprise displaying the combined map.

14. The non-transitory computer-readable medium of claim 13, wherein the operations further comprise verifying that the combined map and the fracture label are proper for simulating a real-world scenario, wherein verifying comprises:
calculating a sum of singular values from a singular value decomposition (SVD) of the standardized data and the combined map;
calculating a maximum Euclidian distance among the singular values from the singular value decomposition (SVD) of the standardized data and the combined map;
verifying that the sum of the singular values and the maximum Euclidian distance are between verification thresholds, wherein the verification thresholds comprise a minimum threshold and a maximum threshold; and
disregarding the combined map and the fracture label below the minimum threshold and above the maximum threshold;
wherein the sum of the singular values and the maximum Euclidian below the minimum verification threshold represent subjective fractures that do not apply a disturbance in the standardized data, and wherein the sum of the singular values and the maximum Euclidian above the maximum verification threshold represent artificial fractures.

15. The non-transitory computer-readable medium of claim 13 or 14, wherein the operations further comprise performing an action in response to the combined map, and wherein the action comprises selecting a completion site and/or forecasting production and/or generating and/or transmitting a signal that recommends, instructs, or causes a physical action to occur at a wellsite, and wherein the physical action comprises selecting where to drill a wellbore, drilling the wellbore, varying a weight and/or torque on a drill bit that is drilling the wellbore, varying a drilling trajectory of the wellbore, varying a concentration and/or flow rate of a fluid pumped into the wellbore, or a combination thereof.
